# EUROPÄISCHE PATENTSCHRIFT

(11) **EP 0 917 816 B1**
(45) Veröffentlichungstag und Bekanntmachung des Hinweises auf die Patenterteilung: **15.01.2003**
(21) Anmeldenummer: 98121349.9
(22) Anmeldetag: 10.11.1998
(51) Int. Cl.: A01B 79/00

(54) **Verfahren zum Steuern und/oder Regeln von landwirtschaftlichen Verteilmaschinen**
Process for controlling and/or regulating agricultural spreading machines
Procédé pour ajuster et/ou régler des machines agricoles d'épandage

(30) Priorität: 20.11.1997 DE 19751475
(43) Veröffentlichungstag der Anmeldung: 26.05.1999
(73) Patentinhaber: Amazonen-Werke H. Dreyer GmbH & Co. KG, 49202 Hasbergen (DE)
(72) Erfinder: Scheufler, Bernd, Dr. Ing., 49205 Hasbergen (DE); Kiefer, Stefan, Dipl.-Ing. agr., 49536 Lienen (DE); Marquering, Johannes, Dipl.-Ing., 49176 Hilter-Borgloh (DE)

(56) Entgegenhaltungen:
- EP-A- 0 282 639
- EP-A- 0 458 107
- EP-A- 0 726 024
- WO-A-86/05353
- WO-A-95/01719
- DE-A- 19 528 663

## Beschreibung

Die Erfindung betrifft ein Verfahren zum Steuern und/oder Regeln von landwirtschaftlichen Verteilmaschinen gemäß des Oberbegriffes des Patentanspruches 1.

In der DE-OS 196 03 426 ist ein derartiges Verfahren beschrieben.

Der Erfindung liegt die Aufgabe zugrunde, dieses Verfahren zu verbessern.

Diese Aufgabe wird erfindungsgemäß durch die kennzeichnenden Merkmale des Anspruches 1 gelöst.

Infolge dieser Maßnahmen wird in bequemer und vorteilhafter Weise auf dem Hof-PC die Dünge- bzw. Verteilplanung der auszubringenden Materialien geplant. Somit kann in vorteilhafter Weise ein Optimierungsprogramm angewendet werden, um möglichst mit geringen Datenmengen eine vorteilhafte Ausbringung des Materiales, beispielsweise Dünger, entsprechend der Applikationskarte durch die Verteilmaschine zu erreichen. Es ist dann nur eine geringe Datenmenge mittels einer Datenübertragungseinrichtung auf dem Bordcomputer, der die Verteilmaschine regelt bzw. steuert, zu übertragen. In der der Planung zugrunde liegenden Applikationskarte sind verschiedene Informationen, wie die Erträge je Standort, die Nährstoffversorgung des Bodens, das Expertenwissen und andere Informationen hinterlegt.

In vorteilhafter Weise werden die Verteildaten entsprechend des auf der zu bearbeitenden Feldfläche angelegten Fahrgassensystems hinterlegt. Hierbei wird auch angegeben, in welche Richtung die jeweils zu befahrene Fahrgasse hinterlegt ist.

Dieses reduziert ebenfalls die Hinterlegung der Verteildaten auf dem Bordcomputersystem.

Bei dem Einsatz eines Schleuderstreuers werden, bei unterschiedlichen Nährstoffversorgungen, in einer Arbeitsbahn bzw. in Teilbreitenarbeitsbahn entweder entsprechend der überwiegenden Nährstoffversorgung oder eines entsprechend gemittelten Mittelwertes die Verteilerdaten erstellt und hinterlegt.

Desweiteren ist vorgesehen, daß beim Abfahren der Fahrgassen während des Ausbringvorganges ein Vergleich der aktuell befahrenen Richtung mit der hinterlegten Richtung des Fahrgassensystem und/oder der Fahrgassen des Fahrgassensystems erfolgt. Hiermit ist sichergestellt, daß auch bei einer begrenzten Datenmenge der hinterlegten Daten eine Ausbringung des Materiales entsprechend der Planung auf dem Hof-PC erfolgt. In vorteilhafter Weise ist hierbei vorgesehen, daß bei Befahren einer Fahrgasse in anderer Richtung als im Bordcomputer hinterlegt, ein Alarm erfolgt und/oder automatisch eine Korrektur der hinterlegten Daten entsprechend der aktuell befahrenen Richtung der Fahrgassen des Fahrgassensystems erfolgt (die Verteildaten für die Ausbringung werden quasi "gespiegelt"). Somit ist automatisch eine richtige Ausbringung entsprechend der geplanten Verteilung gewährleistet.

Weitere Einzelheiten der Erfindung sind der Beispielsbeschreibung und den Zeichnungen zu entnehmen. Hierbei zeigen
- Fig.1: den Ausschnitt einer Applikationskarte eines Feldes,
- Fig.2: die Applikationskarte gemäß Fig.1 mit einem darüber gelegten Raster,
- Fig.3: die Applikationskarte gemäß Fig.1, wobei die Flächenbereiche entsprechend des Rasters nach Fig.2 gerastert sind und

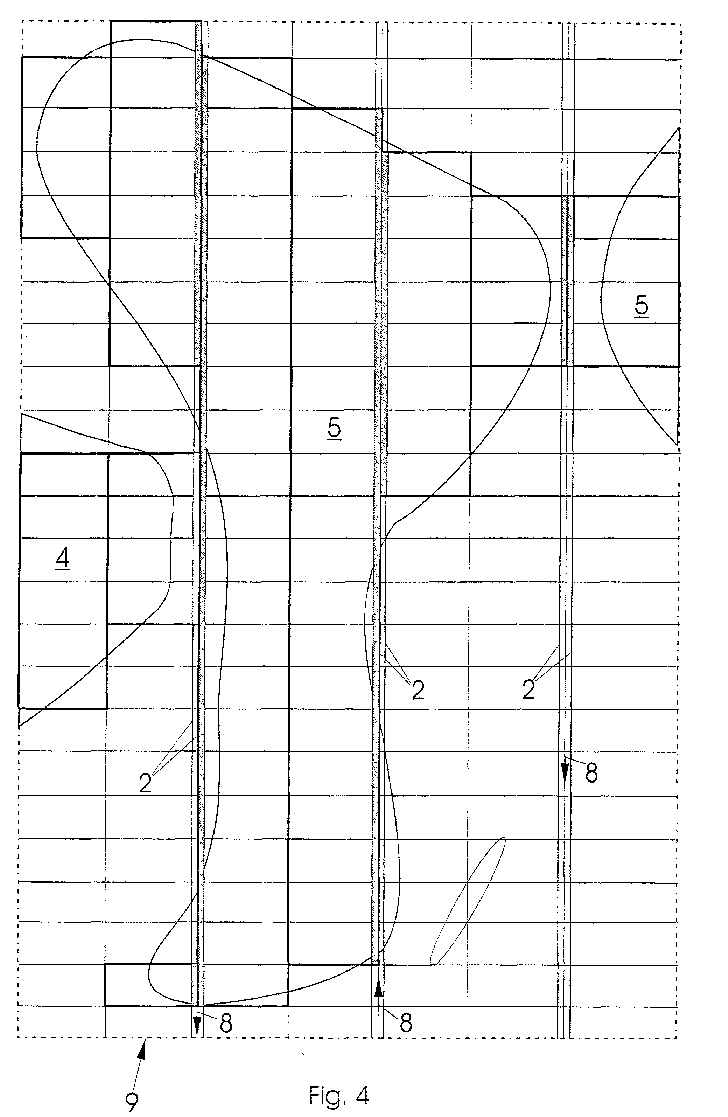

- Fig.4: die vereinfachte Applikationskarte, auf welcher die Fahrgassen mit der Fahrtrichtung und den zugeordneten Verteilungen dargestellt ist.

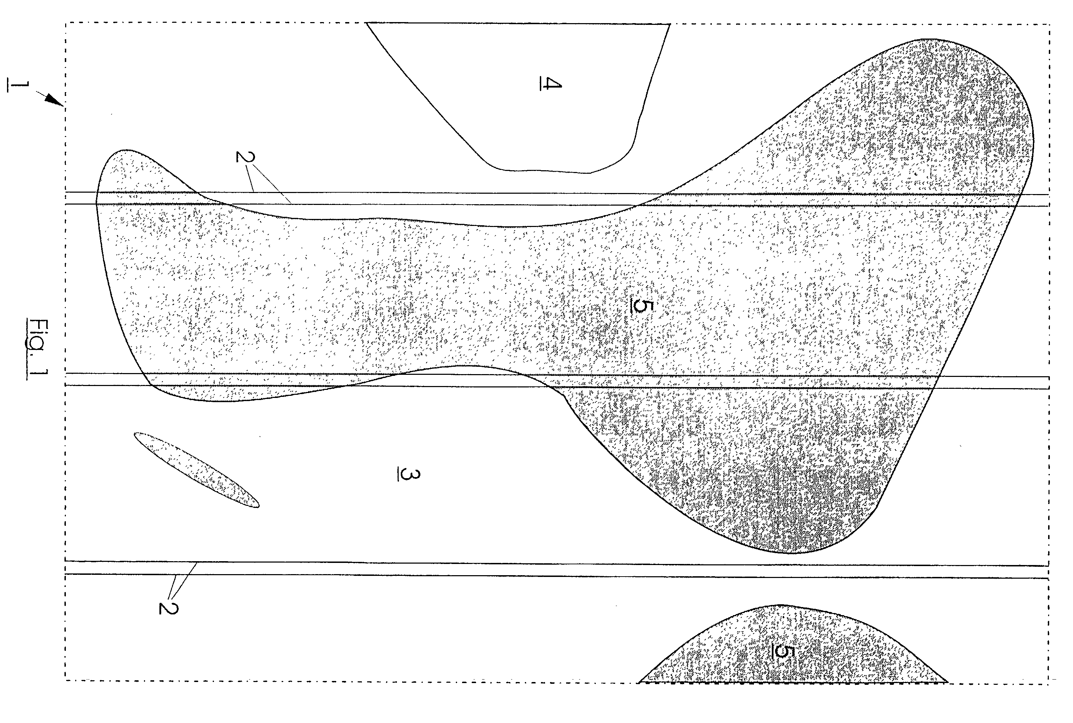

Zur bedarfsgerechten Bewirtschaftung von Flächen wird zunächst auf der als Hof-PC ausgebildeten Rechneranlage eine Applikationskarte 1 aus den spezifischen Beschaffenheiten, wie beispielsweise Nährstoffversorgung, Bodenfestigkeit, Ernteertrag und/oder Bodenart etc. je Standort erstellt, so daß sich beispielsweise die Applikationskarte 1, wie sie in Fig.1 ausschnittsweise dargestellt ist, ergibt. Mit den durchzogenen Linien sind die Fahrgassen 2 dargestellt, in welchen Abständen sie angelegt und in welchen Abständen das Feld durchfahren werden soll, um so ein genaues Anschlußfahren zu gewährleisten.

Desweiteren sind verschiedene Teilfächen unterschiedich schattiert dargestellt. Die weiß unterlegte Fläche 3 stellt die überwiegende Beschaffenheit des Feldes, beispielsweise die Basisbeschaffenheit dieses Feldes dar.

Die hell schattierte Fläche 4 stellt einen Bereich mit einer gegenüber der Basisfläche 3 niedrigeren Nährstoffversorgung dar, während die dunkler schattierten Flächen 5 einen höheren Nährstoffversorgung als die Basisfläche 3 aufweisen. Die in gleicher Weise schattierten Flächen weisen also eine ähnliche oder gleiche Nährstoffversorgung auf.

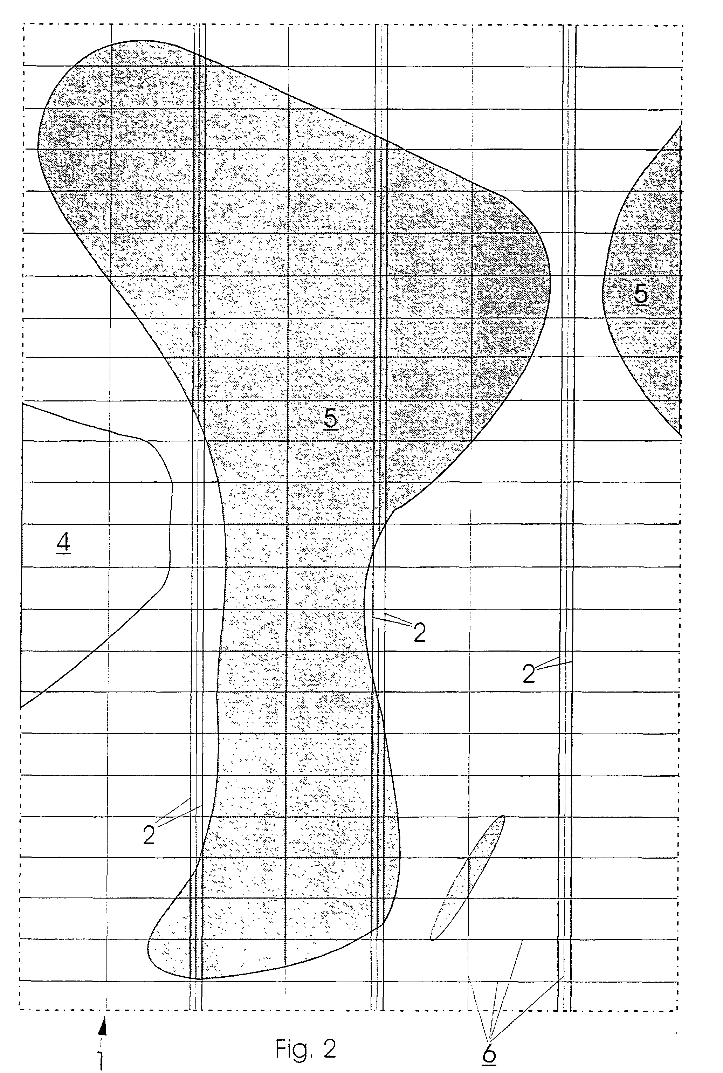

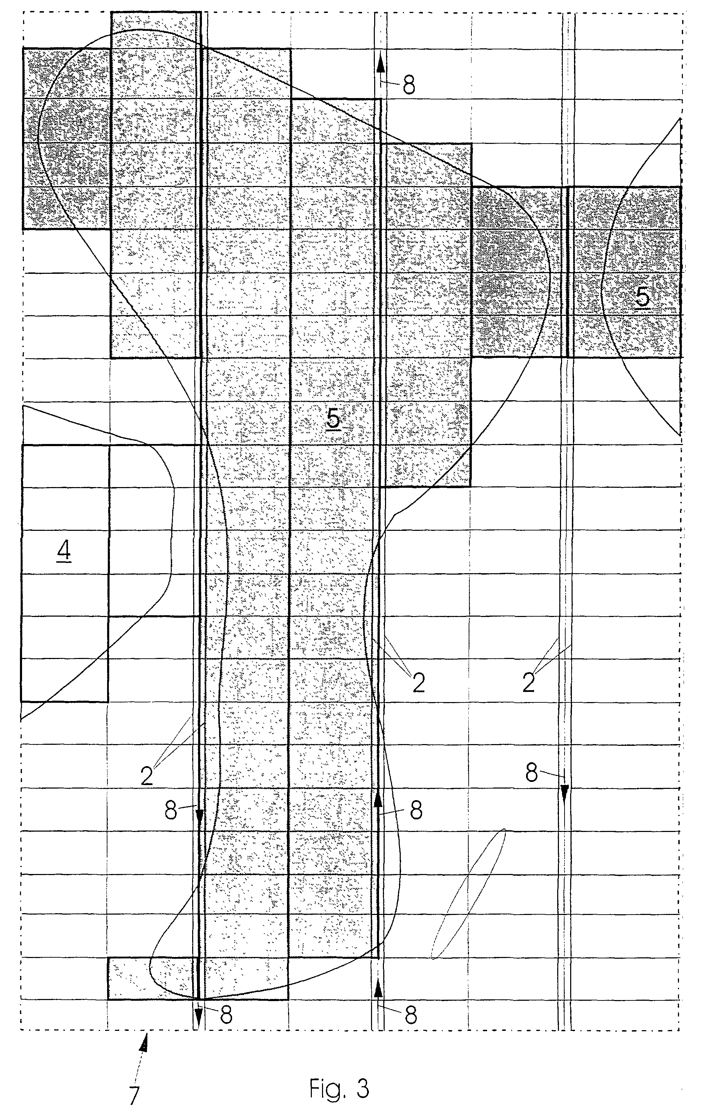

Um nun die Datenmenge in einem ersten Schritt zu begrenzen und eine einfachere, jedoch ausreichend genaue Steuerung der Ausbringmenge einer Verteilmaschine erreichen zu können, wird über die Karte gemäß Fig.1 auf dem Hof-PC ein Raster 6, wie dieses in Fig.2 dargestellt ist, gelegt. Entsprechend dieses Rasters 6 werden dann die Flächen 3, 4, 5 entsprechend der Verteilcharakteristik und der Bodenbeschaffenheit entsprechend Fig.3 festgelegt. Die Fig.3 zeigt also die gerasterte Applikationskarte 7 der Karte 1 gemäß Fig.1.

Desweiteren wird aufgrund der gerasterten Applikationskarte 7 und der maschinenspezifischen Verteilcharakteristik der jeweils zum Einsatz kommenden Verteilmaschine eine Arbeitsdatei auf dem Hof-PC erstellt. Diese Arbeitsdatei stellt eine optimale Anpassung zwischen der Applikationskarte 7 und Verteilcharakteristik der zum Einsatz kommenden Verteilmaschine dar. Auf der Rechneranlage, dem Hof-PC, werden somit die in einer Applikationskarte 1 gemäß Fig.1 hinterlegten Daten mit den technischen Eigenschaften der für die Ausbringung von Material eingesetzen Verteilmaschine, im Ausführungsbeispiels eines Schleuderdüngerstreuers, verknüpft, um in optimal angepaßter Weise eine Umsetzung von geplanter Verteilung und der technischen Möglichkeiten der eingesetzten Verteilmaschine, hier Schleuderdüngerstreuer, zu realisieren. Diese auf dem Hof-PC erstellten Verteildaten werden mittels einer Datenübertragungseinrichtung in den Bordcomputer übertragen.

Um die zu übertragenen Datenmenge zu verringern, wird aus der Applikationskarte 7 gemäß Fig.3 die Applikationskarte 9 auf dem Hof-PC erstellt. Diese Applikationskarte 9 gibt jeweils für die zu befahrene Fahrgasse 2 an, über welche Strecke und auf welcher Seite welches Dosierorgan welche Verteilmenge je Standort und Flächeneinheit verteilen soll. Es ist also auf dieser Applikationskarte 9, die in dem Bordcomputer, der auf dem die Verteilmaschine tragende Schlepper oder auf der Verteilmaschine angeordnet ist,eingespeichert wird, lediglich noch hinterlegt, an welcher die Position der Fahrgasse 2 das jeweilige Dosierorgan welche Menge Material dem jeweiligen Verteilorgan zuführen soll.

Die Verteildaten sind also entsprechend des auf der zu bearbeitenden Feldfläche angelegten Fahrgassensystems hinterlegt. Hierbei ist die Richtung 8 der jeweils zu befahrenen Fahrgasse 2 mit den Verteildaten verknüpft hinterlegt. Hierbei ist vorgesehen, daß der Bordcomputer in Verbindung mit den hinterlegten Verteildaten derart ausgelegt ist, daß beim Abfahren der Fahrgassen 2 während des Ausbringvorganges ein Vergleich der aktuell befahrenen Richtung mit der hinterlegten Richtung 8 des Fahrgassensystems oder der Fahrgassen 2 des Fahrgassensystems erfolgt. Hierbei ist dann das Bordcomputersystem in Verbindung mit den hinterlegten Verteildaten derart ausgelegt, daß beim Befahren einer Fahrgasse 2 in einer anderen Richtung als im Bordcomputer hinterlegt, ein Alarm erfolgt und/oder automatisch eine Korrektur der hinterlegten Verteildaten entsprechend der aktuell befahrenen Richtung der Fahrgassen 2 des Fahrgassensystems erfolgt. Es erfolgt quasi eine Spiegelung der hinterlegten Verteildaten bzgl. der Mitte der Verteilmaschine bzw. der momentan befahrenen Fahrgasse.

Entsprechend der Arbeitsdatei werden dann die Dosierorgane der Verteilmaschine gesteuert bzw. geregelt, so daß in gewünschter Weise das auszubringende Verteilgut ausgebracht wird.

In vorteilhafter Weise wird die Rasterung 6 in Richtung der Fahrgassen 2, und zwar unter Angabe der Richtung (wie durch die Pfeile angedeutet ist), in welche die jeweilige Fahrgasse gemäß Planung befahren werden soll, angelegt, wie dieses in den Fig.2 und 3 dargestellt ist.

Desweiteren ist erfindungsgemäß vorgesehen, daß das Dosierorgan am Vorgewende automatisch aufgrund des Positionsgebers zum Erzeugen von Feldkoordinatensignalen (GPS) in Verbindung mit den abgespeicherten Felddaten (Applikationskarte 7) abgeschaltet wird.

Desweiteren ist es möglich, daß an dem Rechner zur Erhöhung der Genauigkeit der GPS-Signale zusätzliche Sensoren, wie Radar-, Lenkwinkelgeber- oder Radsensoren (Messung der Wegstrecke) vorgesehen sind.
Ebenfalls ist es möglich, daß der Öffnungs- und Schließvorgang der Dosierorgane bzw. des Dosierorganes eines Schleuderdüngerstreuers unter Berücksichtigung der Überlappung am Vorgewende mit der Fahrgasse entsprechenden Vorgabe in der Karte durchgeführt wird.

## Patentansprüche

1. Verfahren zum Steuern und/oder Regeln von landwirtschaftlichen Verteilmaschinen, bei denen in einem Bordcomputer maschinenspezifische Daten zur Erstellung je Standort auf der Grundlage von Applikationskarten einzuspeichern sind und mit einem zugeordnetem Standortbestimmungssystem (DGPS), **dadurch gekennzeichnet, daß** auf einer Rechneranlage, beispielsweise Hof-PC, die in einer Applikationskarte hinterlegten Daten mit den technischen Eigenschaften der für die Ausbringung von Material eingesetzten Verteilmaschinen, insbesondere Düngerstreuer oder Sämaschine, verknüpft werden, um in optimal aneinander angepaßter Weise eine Umsetzung von geplanter Verteilung und den technischen Möglichkeiten der eingesetzten Verteilmaschine mittels eines Optimierungsprogramms zu realisieren, und daß diese auf der Rechneranlage erstellten Verteildaten mittels einer Datenübertragungseinrichtung in den Bordcomputer übertragbar sind.

2. Verfahren nach Anspruch 1, **dadurch gekennzeichnet, daß** die Verteildaten entsprechend des auf der zu bearbeitenden Feldfläche angelegten Fahrgassensystems hinterlegt werden.

3. Verfahren nach Anspruch 1, **dadurch gekennzeichnet, daß** die Richtung (8) der jeweils zu befahrenen Fahrgassen (2) hinterlegt ist.

4. Verfahren nach Anspruch 3, **dadurch gekennzeichnet, daß** bei dem Abfahren der Fahrgassen (2) während des Ausbringvorganges ein Vergleich der aktuell befahrenen Richtung mit der hinterlegten Richtung (8) des Fahrgassensystems und/oder der Fahrgassen (2) des Fahrgassensystems erfolgt.

5. Verfahren nach Anspruch 4, **dadurch gekennzeichnet, daß** bei dem Befahren einer Fahrgasse in anderer Richtung, als im Bordcomputer hinterlegt, ein Alarm erfolgt und/oder automatisch eine Korrektur der hinterlegten Daten entsprechend der aktuell befahrenen Richtung der Fahrgassen des Fahrgassensystems erfolgt.

## Claims

1. Method of controlling and/or regulating agricultural distributing machines, wherein data, specific to the machine, for establishing a particular position is to be stored in an on-board computer based on user cards, and using an associated position finding system (DGPS), **characterised in that** the data, input in a user card, is combined with the technical properties of the distributing machines used for distributing material, more especially a fertiliser spreader or seed drill, on a computer system, for example a personal PC, in order to achieve in an optimum adapted manner, by means of an optimising program, a conversion between the planned distribution and the technical possibilities of the distributing machine used, and **in that** this distribution data, established on the computer system, is transferable to the on-board computer by means of a data transmission unit.

2. Method according to claim 1, **characterised in that** the distribution data corresponding to the tramline system applied to the field area to be worked is input.

3. Method according to claim 1, **characterised in that** the direction (8) of the particular tramlines (2) to be travelled is input.

4. Method according to claim 3, **characterised in that**, as the tramlines (2) are being followed during the distributing process, a comparison is made between the actually travelled direction and the input direction (8) of the tramline system and/or the tramlines (2) of the tramline system.

5. Method according to claim 4, **characterised in that**, if the machine travels along a tramline in a direction other than the one input in the on-board computer, an alarm is given and/or the input data is corrected automatically to correspond to the direction of the tramlines of the tramline system actually being travelled.

## Revendications

1. Procédé de commande et/ou de régulation de distributeurs agricoles dans lesquels un ordinateur embarqué contient les données spécifiques à la machine pour un réglage selon l'emplacement en s'appuyant sur des cartes d'application et à l'aide d'un système de détermination d'emplacement (DGPS) associé,
**caractérisé en ce que**
dans une installation de calcul par exemple l'ordinateur de la ferme, on combine les données d'une carte d'application aux propriétés techniques du distributeur utilisé pour épandre les produits, en particulier l'épandeur centrifuge ou le semoir, pour permettre d'une manière optimale. une conversion de la distribution planifiée et des possibilités techniques du distributeur utilisé à l'aide d'un programme d'optimisation, et
les données de distribution établies par l'installation de calcul sont transmises à l'ordinateur embarqué par l'intermédiaire d'une installation de transmission de données.

2. Procédé selon la revendication 1,
**caractérisé en ce que**
les données de distribution sont enregistrées en fonction du système de voles de passage prévu pour la surface de champ à traiter.

3. Procédé selon la revendication 1,
**caractérisé en ce que**
la direction (8) de chacune des voies de passage (2) est enregistrée.

4. Procédé selon la revendication 3,
**caractérisé en ce qu'**
au démarrage des voies de passage (2), pendant l'opération de distribution, on compare la direction actuellement parcourue et la direction (8) enregistrée du système de voies de passage et/ou les voies de passage (2) du système de voies de passage.

5. Procédé selon la revendication 4,
**caractérisé en ce que**
lors du parcours d'une voie de passage dans l'autre direction que celle enregistrée dans l'ordinateur embarqué, il y a émission d'un signal d'alarme et/ou automatiquement une correction des données enregistrées selon la direction actuellement utilisée des voies de passage par le système de voies de passage.
